(19) Europäisches Patentamt
European Patent Office
Office européen des brevets

(11) Publication number: **0 182 941**
**B1**

# (12) EUROPEAN PATENT SPECIFICATION

(45) Date of publication of patent specification: **25.04.90**

(51) Int. Cl.$^5$: **C 08 G 77/20,** C 08 L 83/06 // (C08L83/06, 83:04)

(21) Application number: **84307896.5**

(22) Date of filing: **14.11.84**

## (54) Dual curing silicone, method of preparing same and dielectric soft-gel compositions thereof.

(43) Date of publication of application:
**04.06.86 Bulletin 86/23**

(45) Publication of the grant of the patent:
**25.04.90 Bulletin 90/17**

(84) Designated Contracting States:
**DE FR GB**

(56) References cited:
**EP-A-0 016 663**
**EP-A-0 044 673**
**DE-A-2 900 162**
**FR-A-2 110 115**
**US-A-3 264 258**

(73) Proprietor: **LOCTITE CORPORATION**
**705 North Mountain Road**
**Newington, Connecticut 06111 (US)**

(72) Inventor: **Lin, Samuel Q. S.**
**415, Central Boulevard**
**Ft. Lee New Jersey 07024 (US)**
Inventor: **Nakos, Steven T.**
**97, Boston Hill Road**
**Andover Connecticut 06232 (US)**

(74) Representative: **Marchant, James Ian et al**
**Elkington and Fife Beacon House 113 Kingsway**
**London WC2B 6PP (GB)**

**The file contains technical information submitted after the application was filed and not included in this specification**

**EP 0 182 941 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to curable polyorganosiloxane (silicone) compositions particularly adapted for use in electronic potting applications.

Because of their excellent thermal stability, low temperature flexibility and high dielectric strength, silicones have been used for potting and encapsulating electrical devices such as integrated circuits. They are typically used as elastomeric or gel-like materials providing shock, vibrational and thermal stress protection on fragile electronic components. References relating generally to silicone gel encapsulants include U.S. Patents 3,933,712; 4,072,635; 4,087,585; 4,271,425; 4,374,967; and D. Dickson, Jr., Proceedings Electric/Electronic Intel. Conf. *12*, 92 (1975). See also prior art description in U.S. Patent 4,374,967. The present commercially available potting silicones include one component compositions such as U.S. Patent 4,271,425 which are cured by moisture, requiring from several hours to days to complete the cure. Faster cures may be obtained from two component systems such as those in U.S. Patent 4,087,585 if elevated temperatures are provided. The two-component systems which require a platinum catalyst, however, are inhibited by organotin compounds, sulfur, amines, urethanes and unsaturated hydrocarbon plasticizers on the substrate surfaces.

It is known that certain silicones containing methacrylate or acrylate functional groups may be cured by ultraviolet light. U.S. Patents 4,201,808 and 4,348,454 and U.K. Patent Application GB 2039287A & EP—A—16663 all describe UV curing compositions of silicones containing methacrylates or acrylates for paper release coatings. The compositions do not produce jelly-like or elastomeric materials.

Accordingly, it is desirable to have a UV curable silicone composition which will produce an elastomeric or soft gel consistency upon curing. Furthermore, it is desirable that the composition be capable of curing by another mechanism in areas which are not readily accessable by UV irradiation.

Summary of the Invention

The present invention is a silicone composition having the desired characteristics set forth above. The composition cures to a soft gel or elastomeric consistency in a matter of seconds or minutes upon irradiation with UV light. Furthermore, the composition will moisture cure in shadow areas. The moisture cure capability, however, does not result in loss of the gel or elastomeric properties.

The present invention provides a method of preparing a reactive silicone curable by moisture and free radical mechanisms, said method characterized by the steps of:

(a) reacting a silanol terminated silicone represented by the formula:

$$HO\text{———}(\overset{R^1}{\underset{R^2}{|\!\!\!\!\!\!\;\;SiO}})_n\text{———}H$$

wherein $R^1$ and $R^2$ are organo groups, no more than 2% of which are cross-linkable under UV or moisture cure conditions, and n is an integer of from 80 up to and including 1500, said silanol having a viscosity of between 500 mPas (500 cps) and 50,000 mPas (50,000 cps), with an acrylic functional trialkoxy- or triaryloxysilane of the formula:

$$(R_3O)_3SiR^5O\overset{O}{\overset{\|}{C}}-\overset{R^4}{\overset{|}{C}}=CH_2$$

wherein $R^3$ are the same or different alkyl or aryl groups, $R^4$ is H or $C_{1-5}$ alkyl and $R^5$ is alkylene, in the presence of a condensation catalyst, the mole ratio of said silane to said silanol being between 2:1 and 6:1 and

(b) removing substantially all of the theoretical amount of $R^3OH$ produced by the reaction.

The present invention also provides a composition capable of curing by both moisture cure and UV cure mechanism, said composition characterized by comprising a mixture in parts by weight of:

(a) 30—100 parts of a reactive polyorgano-siloxane terminated with acrylic functional dialkoxy- or diaryloxy-silyl groups and containing 0.1—5% of a silicone moisture curing catalyst;

(b) 0—70 parts of a trimethylsilyl terminated silicone oil; and

(c) an effective amount of a photosensitizer, wherein the reactive polyorganosiloxane comprises the reaction product of a silanol terminated silicone represented by the formula:

$$HO\text{———}(\overset{R^1}{\underset{R^2}{|\!\!\!\!\!\!\;\;SiO}})_n\text{———}H$$

wherein $R^1$ and $R^2$ are organo groups, no more than 2% of which are cross-linkable under UV or moisture cure conditions, and n is an integer of from 80 up to and including 1500, said silanol having a viscosity of

between 500—50,000 mPas (500—50,000 cps), with an acrylic functional trialkoxy- or triaryloxy-silane of the formula:

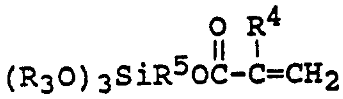

wherein $R^3$ are the same or different alkyl or aryl groups, $R^4$ is H or $C_{1-5}$ alkyl and $R^5$ is alkylene, in the presence of a condensation catalyst, the mole ratio of said silane to said silanol being between 2:1 and 6:1 and the reaction including removing substantially all of the theoretical amount of $R^3OH$ produced by the reaction.

The novel reactive polyorganosiloxanes utilized in the inventive compositions and their method of preparation are also part of the present invention.

Detailed Description of the Invention

The principal ingredient in the formulations of the invention are polyorganosiloxanes terminated with acrylic functional dialkoxysilyl or diaryloxysilyl groups. These silicones may be represented by formula (1):

(1) 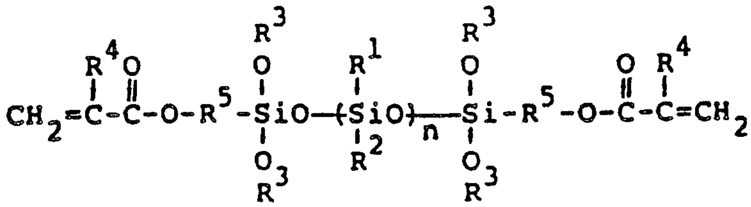

wherein $R^1$ and $R^2$ are organo groups including alkyls, such as methyl, ethyl etc., halo alkyls such as 3,3,3-trifluoropropyl, substituted or unsubstituted aryls such as benzyl or phenyl, and others such as vinyl, methacryloxypropyl, methoxy, mercaptopropyl, hydrogen or benzoin groups; $R^3$ is the same or different alkyl or aryl; $R^4$ is H or $C_{1-5}$ alkyl; $R^5$ is alkylene; and n is an integer greater than or equal to 80.

Preferably, $R^1$ and $R^2$ are alkyl groups, most preferably methyl. Phenyl groups are also suitable but high phenyl content silicones may excessively absorb UV irradiation, thereby reducing the cure through volume of the initial UV cure. If $R^1$ and $R^2$ include functional groups capable of crosslinking under the UV or moisture cure conditions, such as vinyl, methacryloxypropyl and methoxy, such groups should not be present in more than 2% by repeat unit.

For optimum moisture curing characteristics, $R^3$ will preferably be alkyls which have 3 or less carbon atoms. For optimum heat and hydrolytic stability of the $R^5$ linkage, $R^5$ is preferably between 3 and 10 carbon atoms.

The number of repeat units in the silicone of formula (1) must be about 80 or more in order to obtain the desired gel or elastomeric properties in the cured materials. Although n does not have a theoretical limit, it will preferably not exceed 1500. More than 1500 repeat units gives a polymer which is difficult to process, apply and cure.

The moisture curing catalysts in the inventive formulation may be any methoxy silicone moisture cure catalyst which does not adversely affect the acrylic (e.g. initiating or inhibiting cure of the acrylic group). Preferred moisture catalysts are organotitanate catalysts such as tetraisopropylorthotitanate. The higher the amount of the organotitanate catalyst, the faster the curing speed. Consequently, the moisture cure speed may be tailored as desired. Typically the moisture cure catalyst will be present at a level of 0.1%—5% of the amount of reactive silicone of formula (1).

The silicone oils used in the formulations of the invention are trimethylsilyl terminated polydimethylsiloxanes having a viscosity between about 100 and 5,000 mPas (100 and 5,000 cps). These oils are employed as plasticizers to control the texture and softness of the cured material and as diluents to adjust the final viscosity of the composition. For electronic potting compositions in which gel-like materials are desired, the plasticizing silicone oil should be present in the range of about 30—70% by weight of the composition. Lower amounts of silicon oil produce compositions which yield soft rubbery materials. Amounts of silicone oil in excess of about 70% produce materials which will flow even after curing.

The final ingredient of the inventive compositions is a photosensitizer. Photosensitizers which will initiate curing of the acrylic functionalities are well known in the art. They include benzoin and substituted benzoins, benzophenone, Michler's ketone, dialkoxybenzophenone, diethyoxyacetophenone, etc. Any known photosensitizer can be used as well as mixtures thereof, without departing from the invention hereof. Further examples of such photosensitizers may be found in the aforementioned prior patents and in S. P. Pappas, "UV Curing: Science and Technology", Technology Marketing Corp. (1978). The amount of photosensitizer utilized in the inventive compositions will typically be in the range of .1%—5% of the composition. Depending on the characteristics of the particular photosensitizer, however, amounts outside of this range may be employed without departing from the invention hereof so long as they perform the function of rapidly and efficiently initiating polymerization of the acrylic groups.

The photosensitizer ingredient may also be polymer bound, e.g. as a portion of the $R^1$ or $R^2$ groups of the reactive silicone of formula (1). An example of polymer bound photoinitiators and techniques for producing same may be found in U.S. Patent 4,271,425. Appropriate modifications of such techniques to produce polymer bound silicones having the dialkoxyacrylic-functional terminal groups are within the ordinary skill of persons in the silicone synthesis art.

The inventive compositions may also contain other additives so long as they do not interfere with the UV and moisture curing mechanisms. These include adhesion promoters such as 2,3-epoxypropyltrimethoxy-silane, triallyl-S-triazine-2,4,6(1H,3H,5H)-trione and others known to those skilled in the art; fillers such as silica, microballoon glass, etc.

Further examples of fillers usable to modify the texture of the inventive compositions may be found in U.S. Patent 4,072,635 at Col. 4, line 40 — Col. 5, line 7. If the application is for electronic devices, the additives should not include any ionic species.

In electronic applications, ion trapping compounds such as crown ethers and cryptates may be useful for reducing ionic conductivity. Examples are 18-crown-6, 12-crown-4 and 15-crown-5. See also U.S. Patent 4,271,425 where the use of crown ethers in conventional RTV silicone encapsulants is described.

The reactive silicones of formula (1) are easily prepared from silanol terminated silicones of formula (2):

$$HO\text{———}(\underset{R^2}{\overset{R^1}{Si}}O)_n\text{———}H$$

where $R^1$ and $R^2$ are defined as in formula (1). Silanol terminated dimethylsiloxanes of viscosity between about 500 mPas (500 cps) and 50,000 mPas (50,000 cps) will produce reactive silicones within the desired molecular weight range previously specified. For producing soft gel potting compounds silanol terminated dimethylsiloxanes of between about 600 $mm^2/s$ (600 cst) and 20,000 $mm^2/s$ (20,000 cst) are preferred, more preferably between 600 $mm^2/s$ (600 cst) and 4000 $mm^2/s$ (4000 cst).

Silanols of the formula (2) are reacted with silane compositions of the formula (3)

$$(R_3O)_3SiR^5O\overset{O}{\overset{\|}{C}}-\overset{R^4}{\overset{|}{C}}=CH_2$$

where $R^3$, $R^4$ and $R^5$ are also as defined as in formula (1) in the presence of a condensation catalyst such as an organotitanate to produce the reactive silicones of formula (1). Because of commercial availability and good reactivity of both the alkoxy and the acrylic groups, methacryloxytrimethoxysilane is the preferred compound of formula (3).

The mole ratio of silane to silanol terminated siloxane is between 2 and 6 (1—3 moles of trialkoxysilane per equivalent of silanol hydroxyl). Ratios of moles silane (3) to moles silanol (2) which are less than 2:1 produce gelled or taffy-like materials which cannot be usefully employed in the inventive compositions. As the molecular weights of the silanol increases, the minimum level of silane has been observed to increase slightly. Thus, a ratio of at least 2.2:1 is recommended when a 28,000 MW silanol terminated dimethylsiloxane is used, whreas a level of 2:1 is satisfactory for a 12,000 MW silanol terminated dimethylsiloxane.

The titanate catalyst is added in an amount of between 0.1 and 5% by weight. The preferred catalyst is tetraisopropanol titanate. The catalyst and reactants are reacted between 10°C and 200°C, preferably 60°C to 120°C. A vacuum is applied during or after the reaction to remove substantially all of the theoretical amount of $R^3OH$ which is liberated from the reaction of the silanol groups of silicone (2) with silane (3).

The silicone oil and photoinitiator ingredients of the inventive compositions may be added to the composition before or after the reaction of silicone (2) and silane (3). After the reaction, the titanate catalyst level may be adjusted to alter the moisture cure characteristics of the composition.

The compositions of the invention will typically produce slightly softer materials if moisture cured compared to UV cured samples of the same compositions. The moisture cure is usually complete within 24—72 hours. After UV cure, or completion of moisture cure, the samples do not become noticably harder on prolonged aging.

The actual physical characteristics of the cured products obtained from a given composition will depend on the molecular weight of the reactive silicone of formula (1) as well as on the method of cure employed and the amount of oil. In general, the higher the molecular weight of the reacted silicone the softer the cured product and the slower the cure. With silicones of formula (1) which have a molecular weight above about 35,000, the level of oil above which flowable cured products are produced may be somewhat less than 70%.

The following examples are illustrtive of the invention.

## Example 1

In a round-bottomed flask 50.0 g of a hydroxyl terminated polydimethylsiloxane of 680 $mm^2/s$ (680 $mm^2/s$ (680 cst) viscosity (0.3% hydroxyl by weight), 2.62 g methacryloxypropyltrimethoxysilane and 0.21 g

tetraisopropylorthotitanate were reacted on a rotary evaporator at 1333 Pa (10 mm Hg) pressure at 60°C for two hours. The viscosity of the mixture increased for the first hour and then decreased during the second hour. A full vacuum (approximately 66.7 Pa (0.5 mm Hg)) was applied for an additional 4 hours at 80°C. The flask was removed from the evaporator and flushed with nitrogen. The reactive silicone product was a yellow liquid.

The product was then used to formulate mixtures with 100 $mm^2/s$ (100 cst) or 1000 $mm^2/s$ (1,000 cst) trimethylsilyl terminated silicone oils. The mixtures ranged from 0—90% silicone oil. To each of these mixtures was added 2% by weight diethoxyacetophenone as photoinitiator. Samples of these compositions, about 0.64 cm (¼") thick, were then cured by 1—2 minute exposure to UV irradiation of about 70,000 microwatts/$cm^2$ or by 24 hour moisture cure at ambient temperature and humidity. Above about 70% oil content, curing was very difficult and non-flowable products were not achieved by the moisture cure mechanism. Samples containing between 0 and 70% oil ranged, respectively, from a soft rubbery material (Shore A 10—15) to a very soft sticky gel (Shore A unmeasurable) which showed some tendency to creep but would not flow.

Example 2

The synthetic procedure of Example 1 was repeated using 50.0 g of a 3500 $mm^2/s$ (3500 cst) hydroxyl terminated polydimethylsiloxane (28,000 MW), 1.05 g methacryloxypropyl trimethoxysiloxane and 0.20 g tetraisopropylorthotitanate. The product was a viscous liquid. A sample of the product was mixed with 2% diethoxyacetophenone and cured with UV irradiation of 70,000 microwatts/$cm^2$ to a stretchable soft rubber. Another sample of the same composition cured to a slightly softer rubber after 2½ days exposure to ambient temperature and humidity.

Example 3

A methacryloxypropyldimethoxysilyl terminated dimethylsiloxane was prepared from 101.7 g of a 20,000 $mm^2/s$ (20,000 cst) silanol terminated dimethylsiloxane, 2.6 g methacryloxypropyltrimethoxysilane and 0.3 g tetraisopropylorthotitanate in a manner similar to that of Examples 1 and 2 except that 100.9 g of a 100 $mm^2/s$ (100 cst) trimethylsilyl terminated silicone oil was added to the mixture prior to heating. The resulting product has a viscosity of 21,200 mPas (21,200 cps).

3.05 g of the 21,200 mPas (21,200 cps) product were then mixed with 0.6 g of the same 100 $mm^2/s$ (100 cst) silicone oil and 0.07 g dimethoxyacetophenone. This composition, containing 58% oil, cured to a soft gel 0.16 cm (1/16") deep upon exposure to UV of about 70,000 microwatts/$cm^2$ for 60 seconds.

193.8 g of the 21,200 mPas (21,200 cps) product were mixed with 45 g of the 100 $mm^2/s$ (100 cst) silicone oil and 5 g dimethoxyacetophenone. The mixture was cast into 0.32 cm (⅛") thick open top molds and cured by UV light of the same intensity for six intervals of 20 seconds each, with a cooling period between each interval. The samples were then allowed to moisture cure overnight after which they were removed from the molds in 10.2 × 10.2 cm (4" × 4") square pieces, turned over, and the bottom surfaces subjected to three 20 second intervals of UV exposure to reduce tackiness. 10.2 × 10.2 cm (4" × 4") pieces were then subjected to electrical testing, the results of which are given in Table I below:

TABLE I

| Test Performed | Individual Values | Average Value |
|---|---|---|
| ASTM D-149 Di-electric Strength, volts/mil | 340 230 210 250 260 | 260 |
| ASTM D-256, Volume Resistivity, $10^{14}$ ohm-cm | 3.8 3.9 4.8 3.5 3.5 | 3.9 |
| ASTM D-150, Di-electric Constant, $10^2$ Hz | 2.87 4.28 | 3.58 |
| ASTM D-150, Di-electric Constant, $10^5$ Hz | 2.59 2.83 | 2.71 |
| ASTM D-150 Dissipation Factor, $10^2$ Hz | 0.0018 0.0017 | 0.0018 |
| ASTM D-150, Dissipation Factor, $10^5$ Hz | 0.0012 0.0012 | 0.0012 |

**Claims**

1. A method of preparing a reactive silicone curable by moisture and free radicle mechanisms, said method characterized by the steps of:

(a) reacting a silanol terminated silicone represented by the formula:

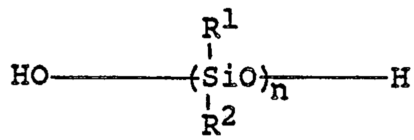

wherein $R^1$ and $R^2$ are organo groups, no more than 2% of which are cross-linkable under UV or moisture cure conditions, and n is an integer of from 80 up to and including 1500, said silanol having a viscosity of between 500 mPas (500 cps) and 50,000 mPas (50,000 cps), with an acrylic functional trialkoxy- or triaryloxy-silane of the formula:

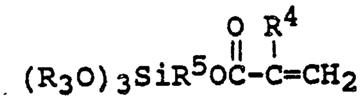

wherein $R^3$ are the same or different alkyl or aryl groups, $R^4$ is H or $C_{1-5}$ alkyl and $R^5$ is alkylene, in the presence of a condensation catalyst, the mole ratio of said silane to said silanol being between 2:1 and 6:1 and

(b) removing substantially all of the theoretical amount of $R^3OH$ produced by the reaction.

2. A method as in claim 1, characterized in that said silane to silanol ratio is between 2:1 and 2.5:1.

3. A composition capable of curing by both moisture cure and UV cure mechanism, said composition characterized by comprising a mixture in parts by weight of:

(a) 30—100 parts of a reactive polyorgano-siloxane terminated with acrylic functional dialkoxy- or diaryloxy-silyl groups and containing 0.1—5% of a silicone moisture curing catalyst;

(b) 0—70 parts of a trimethylsilyl terminated silicone oil; and

(c) an effective amount of a photosensitizer, wherein the reactive polyorganosiloxane comprises the reaction product of a silanol terminated silicone represented by the formula:

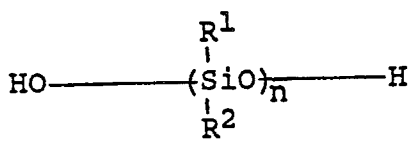

wherein $R^1$ and $R^2$ are organo groups, no more than 2% of which are cross-linkable under UV or moisture cure conditions, and n is an integer of from 80 up to and including 1500, said silanol having a viscosity of between 500—50,000 mPas (500—50,000 cps), with an acrylic functional trialkoxy- or triaryloxy-silane of the formula:

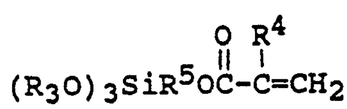

wherein $R^3$ are the same or different alkyl or aryl groups, $R^4$ is H or $C_{1-5}$ alkyl and $R^5$ is alkylene, in the presence of a condensation catalyst, the mole ratio of said silane to said silanol being between 2:1 and 6:1 and the reaction including removing substantially all of the theoretical amount of $R^3OH$ produced by the reaction.

4. A composition as in claim 3, characterized by one or more of the following features:

(a) wherein substantially all $R^3OH$ produced by the reaction of said silanol and silane is removed;

(b) said photosensitizer is selected from substituted or unsubstituted benzoin, benzophenone, dialkoxybenzophenone, Michlers' ketone and diethoxyacetophenone;

(c) said $R^1$ or $R^2$ organo groups on said silanol terminated silicone include photosensitizing groups, preferably benzoin or benzoin ether groups said groups comprising said photosensitizer ingredient c;

(d) said silanol terminated silicone has a vicosity of between about 600 $mm^2/s$ (600 cst) and 20,000 $mm^2/s$ (20,000 cst), preferably between about 600 $mm^2/s$ (600 cst) and 4000 $mm^2/s$ (4000 cst); and

(e) said silane to silanol mole ratio is between 2:1 and 2.5:1.

5. A composition as in either of claims 3 or 4, characterized by containing a said trimethylsilyl terminated silicone oil, the silicone oil having a viscosity of between 100 and 5,000 mPas (100 and 5,000 cps).

6. A composition as in any of claims 3 to 5, characterized by comprising between 30 and 70% of said silicone oil.

7. A composition as in any of claims 3 to to 6, characterized in that said moisture cure catalyst comprises an orthotitanate catalyst.

8. A composition as in any of claims 3 to 7, further comprising an adhesion promoter and/or an ion trapping compound.

9. Use of a composition as in any of claims 3 to 8 for electronic potting applications.

**Patentansprüche**

1. Verfahren zur Herstellung eines durch Feuchtigkeit und über freie Radikale laufende Mechanismen härtbaren reaktiven Silikons, welches Verfahren durch die Schritte gekennzeichnet ist,

(a) Umsetzen eines Silanol-terminierten Silikons der Formel

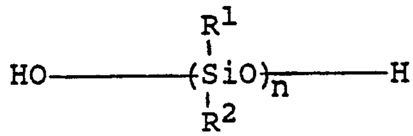

worin $R^1$ und $R^2$ organische Gruppen sind, von denen nicht mehr als 2% unter UV- oder Feuchtigkeits-Härtbedingungen vernetzbar sind, und n eine ganze Zahl von 80 bis zu und einschließlich 1500 ist, wobei das Silanol eine Viskosität zwischen 500 mPas (500 cps) und 50.000 mPas (50.000 cps) aufweist, mit einem Acryl-funktionellen Trialkoxy- oder Triaryloxysilan der Formel

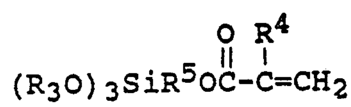

worin $R^3$ gleiche oder verschiedene Alkyl- oder Arylgruppen sind, $R^4$ H oder $C_{1-5}$-Alkyl ist und $R^5$ Alkylen ist, in Gegenwart eines Kondensationskatalysators, wobei das Molverhältnis des Silans zum Silanol zwischen 2:1 und 6:1 liegt und

(b) Entfernen von im wesentlichen der gesamten theoretischen Menge an durch die Reaktion erzeugtem $R^3OH$.

2. Verfahren nach Anspruch 1, dadurch gekennzeichnet, dass das Silan-zu-Silanol-Verhältnis zwischen 2:1 und 2,5:1 liegt.

3. Zusammensetzung, die sowohl durch Feuchtigkeitshärtung als auch durch einen UV-Härtungsmechanismus härtbar ist, welche Zusammensetzung dadurch gekennzeichnet ist, dass sie als Mischung in Gewichtsteilen umfasst:

(a) 30 bis 100 Teile eines reaktiven Polyorganosiloxans, das mit acrylfunktionellen Dialkoxy- oder Diaryloxysilylgruppen terminiert ist und 0,1 bis 5% eines Katalysators für die Silikon-Feuchtigkeitshärtung enthält;

(b) 0 bis 70 Teile eines Trimethylsilyl-terminierten Silikonöls und

(c) eine wirksame Menge eines Photosensibilisierers,

worin das reaktive Polyorganosiloxan das Reaktionsprodukt eines Silanol-terminierten Silikons der Formel umfasst:

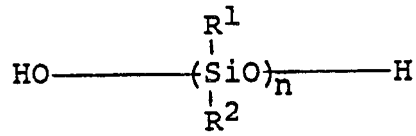

worin $R^1$ und $R^2$ organische Gruppen sind, von denen nicht mehr als 2% unter UV- oder Feuchtigkeitshärtungsbedingungen vernetzbar sind, und n eine ganze Zahl von 80 bis zu und einschliesslich 1500 ist, wobei das Silanol eine Viskosität zwischen 500 und 50.000 mPas (500 und 50.000 cps) hat, mit einem acrylfunktionellen Trialkoxy- oder Triaryloxysilan der Formel

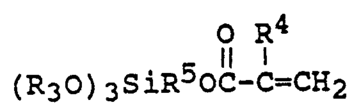

worin $R^3$ gleich oder verschiedene Alkyl- oder Arylgruppen sind, $R^4$ H oder $C_{1-5}$-Alkyl ist und $R^5$ Alkylen ist, in Gegenwart eines Kondensationskatalysators umfasst, wobei das Molverhältnis des Silans zum Silanol zwischen 2:1 und 6:1 liegt und die Reaktion die Entfernung von im wesentlichen der gesamten theoretischen Menge an durch die Reaktion erzeugten $R^3OH$ einschliesst.

4. Zusammensetzung nach Anspruch 3, gekennzeichnet durch eines oder mehrere der folgenden Merkmale:

(a) worin im wesentlichen alles durch die Reaktion des Silanols und Silans erzeugtes $R^3OH$ entfernt wird;

(b) der Photosensibilisierer aus substituiertem oder unsubstituiertem Benzoin, Benzophenon, Dialkoxybenzophenon, Michlers Keton und Diethoxyacetophenon ausgewählt ist;

(c) die organischen Gruppen $R^1$ oder $R^2$ am Silanolterminierten Silikon photosensibilisierende Gruppen, vorzugweise Benzoin oder Benzoinethergruppen einschliessen, wobei diese Gruppen den photosensiblisierenden Bestandteil c umfassen:

(d) das Silanol-terminierte Silikon eine Viskosität zwischen etwa 600 $mm^2/s$ (600 cst) und 20.000 $mm^2/s$ (20.000 cst) hat, vorzugsweise zwischen etwa 600 $mm^2/s$ (600 cst) und 4000 $mm^2/s$ (4000 cst); und

(e) das Silan-zu-Silanol-Molverhältnis zwischen 2:1 und 2,5:1 liegt.

5. Zusammensetzung nach einem der Ansprüche 3 oder 4, dadurch gekennzeichnet, dass sie ein Trimethylsilyl-terminiertes Siliköl enthält, wobei das Silikonöl eine Viskosität zwischen 100 und 5000 mPas (100 und 5000 cps) hat.

6. Zusammensetzung nach einem der Ansprüche 3 bis 5, dadurch gekennzeichnet, daß sie zwischen 30 und 70% Silikonöl umfasst.

7.Zusammensetzung nach einem der Ansprüche 3 bis 6, dadurch gekennzeichnet, dass der Katalysator für die Feuchtigkeitshärtung einen Orthotitanatkatalysator umfasst.

8. Zusammensetzung nach einem der Ansprüche 3 bis 7, welche weiterhin einen Adhäsionspromoter und/oder eine ionenfangende Verbindung umfasst.

9. Verwendung einer Zusammensetzung, nach einem der Ansprüche 3 bis 8 für elektronische Einbettung.

**Revendications**

1. Un procédé de préparation d'une silicone réactive durcissable par des mécanismes de durcissement par l'humidité et radicalaire, ledit procédé étant caractérisé par les étapes suivantes:

(a) faire réagir une silicone terminée par des groupes silanols représentée par la formule:

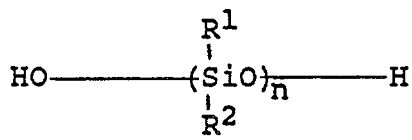

dans laquelle $R^1$ et $R^2$ sont des groupes organiques dont pas plus de 2% ne sont réticulables dans des conditions de durcissement par les rayons UV ou l'humidité, et n est un nombre entier de 80 à 1500 inclusivement, ledit silanol ayant une viscosité comprise entre 500 mPa.s (500 cPo) et 50 000 mPa.s (50 000 cPo), avec un trialcoxy- ou triaryloxysilane à fonction acrylique de la formule:

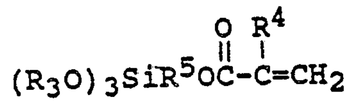

dans laquelle les radicaux $R^3$ sont des groupes alkyles ou aryles identiques ou différents, $R^4$ est H ou un groupe alkyle en $C_1$—$C_5$ et $R^5$ est un groupe alkylène,

en présence d'un catalyseur de condensation, le rapport molaire dudit silane audit silanol étant comprise entre 2:1 et 6:1; et

(b) éliminer sensiblement toute la quantité théorique de $R^3OH$ produite par la réaction.

2. Un procédé tel que dans la revendication 1, caractérisé en ce que ledit rapport du silane au silanol est compris entre 2:1 et 2,5:1.

3. Une composition capable de durcir par l'un et l'autre d'un mécanisme de durcissement par l'humidité et d'un mécanisme de durcissement par le lumière ultraviolette, ladite composition étant caractérisée en ce qu'elle comprend un mélange, en parties en poids, de:

(a) 30 à 100 parties d'un polyorganosiloxane réactif terminé par des groupes dialcoxy- ou diaryloxysilyles à fonction acrylique et contenant 0,1 à 5% d'un catalyseur de durcissement de silicone par l'humidité;

(b) 0 à 70 parties d'une huile de silicone terminée par des groupes triméthylsilyles; et

(c) une quantité efficace d'un photosensibilisateur, dans lequel le polyorganosiloxane réactif comprend le produit de la réaction d'une silicone terminée par des groupes silanols représentée par la formule:

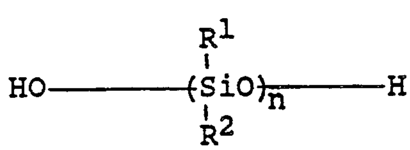

dans laquelle $R^1$ et $R^2$ sont des groupes organiques dont pas plus de 2% ne sont réticulables dans des conditions de durcissement par les rayons UV ou l'humidité, et n est un nombre entier de 80 à 1500 inclusivement, ledit silanol ayant une viscosité comprise entre 500 et 50 000 mPa.s (500 et 50 000 cPo), avec un trialcoxy- ou triaryloxysilane à fonction acrylique de la formule:

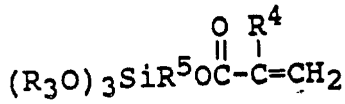

dans laquelle les radicaux $R^3$ sont des groupes alkyles ou aryles identiques ou différents, $R^4$ est H ou un groupe alkyle en $C_1$—$C_5$ et $R^5$ est un groupe alkylène, en présence d'un catalyseur de condensation, le rapport molaire dudit silane audit silanol étant compris entre 2:1 et 6:1 et la réaction comportant l'élimination de sensiblement toute la quantité théorique de $R^3OH$ produite par la réaction.

4. Une composition telle que dans la revendication 3, caractérisée par l'une ou plusieurs des caractéristiques suivantes:

(a) sensiblement tout le $R^3OH$ produit par la réaction dudit silanol et dudit silane en a été éliminé;

(b) ledit photosensibilateur est choisi parmi la benzoïne substituée ou non substituée, la benzophénone, une dialcoxybenzophénone, la cétone de Michler et la diéthoxyacétophénone;

(c) lesdits groupes organiques $R^1$ et $R^2$ présents dans ladite silicone terminée par des groupes silanols comprennent des groupes photosensibilisateurs, de préférence des groupes provenant de la benzoïne ou d'un éther de benzoïne, lesdits groupes constituant ledit ingrédient photosensibilisateur c;

(d) la viscosité de ladite silicone terminée par des groupes silanols est comprise entre environ 600 $mm^2/s$ (600 cSt) et 20 000 $mm^2/s$ (20 000 cSt), de préférence entre environ 600 $mm^2/s$ (600 cSt) et 4000 $mm^2/s$ (4000 cSt); et

(e) ledit rapport du silane au silanol est compris entre 2:1 et 2,5:1.

5. Une composition telle que dans l'une ou l'autre des revendications 3 et 4, caractérisée en ce qu'elle contient ladite huile de silicone terminée par des groupes triméthylsilyles, l'huile de silicone ayant une viscosité comprise entre 100 et 5000 mPa.s (100 et 5000 cPs).

6. Une composition telle que dans l'une quelconque des revendications 3 à 5, caractérisée en ce qu'elle contient entre 30 et 70% de ladite huile de silicone.

7. Une composition telle que dans l'une quelconque des revendications 3 à 6, cartactérisée en ce que ledit catalyseur de durcissement par l'humidité comprend un catalyseur du type orthotitanate.

8. Une composition telle que dans l'une quelconque des revendications 3 à 7, comprenant de plus un agent d'adhésivité et/ou un composé piégeant les ions.

9. Utilisation d'une composition telle que dans l'une quelconque des revendications 3 à 8 pour des applications d'enrobage en électronique.